# EUROPÄISCHE PATENTSCHRIFT

(11) **EP 1 237 761 B1**
(45) Veröffentlichungstag und Bekanntmachung des Hinweises auf die Patenterteilung: **01.09.2004**
(21) Anmeldenummer: 99966886.6
(22) Anmeldetag: 16.12.1999
(51) Int. Cl.: B60R 21/01

(54) **VERFAHREN ZUM PRÜFEN EINER ZÜNDEINRICHTUNG SOWIE ZÜNDEINRICHTUNG**
METHOD FOR TESTING AN IGNITION DEVICE AND A CORRESPONDING IGNITION DEVICE
PROCEDE DE VERIFICATION D'UN DISPOSITIF D'AMORCE ET DISPOSITIF D'AMORCE CORRESPONDANT

(43) Veröffentlichungstag der Anmeldung: 11.09.2002
(73) Patentinhaber: SIEMENS AKTIENGESELLSCHAFT, 80333 München (DE)
(72) Erfinder: GROSSHAUSER, Frank, D-86529 Schrobenhausen (DE)
(86) Internationale Anmeldenummer: PCT/DE1999/004013
(87) Internationale Veröffentlichungsnummer: WO 2001/044021

(56) Entgegenhaltungen:
- WO-A-97/29932
- DE-A- 19 732 677

## Beschreibung

Die Erfindung betrifft ein Verfahren zum Prüfen einer Zündeinrichtung gemäß dem Oberbegriff des Anspruchs 1 und betrifft weiter eine Zündeinrichtung gemäß dem Oberbegriff des Anspruchs 2.

Zündeinrichtungen für pyrotechnischen Insassenschutzeinrichtungen in Kraftfahrzeugen, beispielsweise Airbags, Gurtstraffer usw. müssen eine hohe Funktionszuverlässigkeit haben. Zur Qualitätssicherung werden solche Zündeinrichtungen einem sog. _{"}Bruceton"-Test unterzogen. Dabei wird aus einem Los von Zündeinheiten, beispielsweise Zündpillen, eine Anzahl gezogen. An eine erste Zündeinheit wird dann eine erste Spannung angelegt. Zündet die Zündeinheit bei dieser Spannung noch nicht, wird die Spannung erhöht, bis eine Zündung erfolgt. Nach der Zündung der Zündeinheit wird bei einer zweiten Zündeinheit die Spannung, bei der die erste Zündeinheit gezündet hat, etwas erniedrigt. Zündet die zweite Zündeinheit nicht, wird deren Spannung wiederum geringfügig erhöht, bis eine Zündung erfolgt, usw.

Ein weiterer, häufig zu 100 %, d.h. mit jeder hergestellten Zündeinheit, durchgeführter Test, ist der sog. "Thermal Transition Test (TTT)". Bei schlechter Anbindung der Pyrotechnik an einen Zünddraht der Zündeinheit kann unter Umständen der Zünddraht schmelzen, ohne daß die Pyrotechnik angezündet wird. Eine schlechte Anbindung kann beispielsweise infolge einer Blase im pyrotechnischen Material oder Verschmutzungen am Zünddraht erfolgen. Um den Kontakt zwischen Zünddraht und Pyrotechnik beurteilen zu können, wird der Zünddraht mit einem definierten Strom weit unterhalb der Auslöseschwelle beaufschlagt. Je nach Anbindung an die Pyrotechnik ändert der Zünddraht seinen Widerstand, wobei eine geringe Widerstandsänderung eine gute Anbindung und eine hohe Widerstandsänderung eine schlechte Anbindung zeigt.

Herkömmliche Zündeinrichtungen weisen Anschlüsse auf, über die die Zündeinheit, beispielsweise ein Schmelzdraht, elektrisch unmittelbar zugänglich ist. Bei modernen Zündeinrichtungen, die über einen Zündbus angesteuert werden und die eigene integrierte Elektronikeinheiten aufweisen (Smart Igniter Technology), ist der Schmelzdraht der Zündeinheit nicht mehr unmittelbar elektrisch zugänglich. Der Zündbus ist vielmehr an eine Elektronikeinheit angeschlossen, die an einem Spannungsausgang aus einer am Zündbus liegenden Versorgungsspannung eine wohldefinierte und stabilisierte Zündspannung erzeugt und eine Energiezufuhr zur Zündpille nur dann zuläßt, wenn über den Zündbus ein Zündsignal zugeführt wird. Damit wird eine hohe Betriebssicherheit erreicht. Die beschriebenen Tests sind jedoch nicht mehr möglich, da das Anzündelement selbst, wie ein Schmelzdraht, ein Dünnschichtelement, ein Dickschichtelement, ein sog. Silicon-Bridge-Wire usw. nicht für eine unmittelbare Spannungsbeaufschlagung zugänglich sind.

Der Erfindung liegt die Aufgabe zugrunde, ein Prüfverfahren für moderne, über einen Zündbus ansteuerbare Zündeinrichtungen zu schaffen, das bei einfacher Durchführbarkeit zu verläßlichen Ergebnissen führt. Der Erfindung liegt weiter die Aufgabe zugrunde, eine Zündeinrichtung gemäß dem Oberbegriff des Anspruchs 2 derart weiterzubilden, daß sie in einfacher Weise prüfbar ist.

Der das Verfahren betreffende Teil der Erfindungsaufgabe wird mit dem Merkmal des Anspruchs 1 gelöst. Der die Zündeinrichtung betreffende Teil der Erfindungsaufgabe wird mit den Merkmalen des Anspruchs 2 gelöst.

Ein wesentlicher Grundgedanke der Erfindung liegt darin, die Zündspannungsquelle bei ihrer Verbindung mit der Zündeinheit nicht derart zu entladen, daß bei funktionstüchtiger Zündeinheit eine Zündung erfolgt, sondern die Zündeinheit nur während kurzer, vorgebbarer Zeitintervalle mit der Zündspannungsquelle zu verbinden. Die Zündspannungsquelle bleibt dabei im wesentlichen auf ihrer definierten Zündspannung, so daß die durch die Zündeinheit abfließende Energie durch die Länge des Zeitintervalls gegeben ist.

Die variable Spannung, die bei den eingangs geschilderten herkömmlichen Tests erforderlich ist, wird ersetzt durch variable Zeitintervalle, während der ein Teil der in der Zündspannungsquelle gespeicherten Energie durch die Zündeinheit hindurch abfließt. Die in der Zündspannungsquelle gespeicherte Energie kann in inkrementalen Einheiten bzw. "portionsweise" abfließen, wobei die Größe der inkrementalen Einheiten bzw. die Zeitdauern durch entsprechende Ansteuerung und/oder Programmierung von in der Zündeinrichtung enthaltenen Schaltungen von außerhalb, beispielsweise über den Zündbus, erfolgen kann.

Die Unteransprüche 3 bis 7 sind auf vorteilhafte Weiterbildungen der erfindungsgemäßen Zündeinrichtung gerichtet.

Mit den Merkmalen des Anspruchs 3 ist es möglich, eine Zündeinrichtung für bestimmte Tests vorzuprogrammieren.

Mit den Merkmalen des Anspruchs 4 ist eine hohe Genauigkeit der Testergebnisse gewährleistet, da die Testspannung als konstant vorausgesetzt werden kann.

Mit den Merkmalen des Anspruchs 5 kann die Anbindung pyrotechnischen Materials an das Heiz- oder Schmelzelement ermittelt werden. Weiter können Fehler des Heiz- oder Schmelzelements selbst festgestellt werden.

Gemäß dem Anspruch 6 ist die Zündeinrichtung in besonders einfacher Weise automatisiert prüfbar.

Mit den Merkmalen des Anspruchs 7 kann die Prüfbarkeit nach der Beendigung von Qualitätssicherungstests während und am Ende der Herstellung der Zündeinrichtung gesperrt werden, so daß im Einbauzustand im Kraftfahrzeug allenfalls vereinfachte Prüfroutinen möglich sind, ansonsten aber gewährleistet ist, daß die Zündeinheit bei Verbindung mit der Zündspannungsquelle zündet.

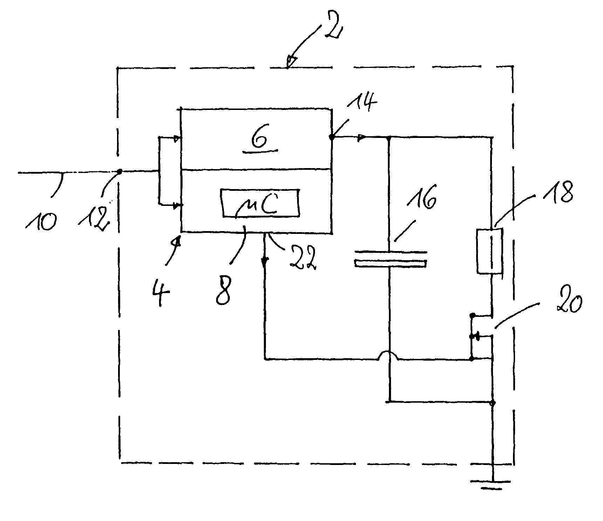

Die Erfindung wird im Folgenden anhand eines in der einzigen Figur dargestellten Blockschaltbildes einer Zündeinrichtung erläutert.

Gemäß der einzigen Figur enthält eine insgesamt mit 2 bezeichnete Zündeinrichtung einer Elektronikeinheit 4 mit einem Spannungsteil 6 und einem Steuerteil 8.

Eine Versorgungsleitung, beispielsweise ein Zündbus 10, ist über einen Anschluß 12 der Zündeinrichtung 2 sowohl mit dem Spannungsteil 6 als auch mit dem Steuerteil 8 verbunden.

Ein Spannungsausgang 14 des Spannungsteils 6 ist mit einem Zündkondensator 16 und einer Zündeinheit 18, beispielsweise einer Zündpille, verbunden, die über einen Zündschalter 20, beispielsweise einen Schalttransistor, mit der vom Spannungsausgang 14 abgewandten Seite des Zündkondensators 16 bzw. Masse verbunden ist.

Ein Steuerausgang 22 des Steuerteils 8 ist mit einem Steuereingang des Zündschalters 20 verbunden.

Die Grundfunktion der beschriebenen, vorteilhafterweise als integrierte Einheit ausgebildeten Zündeinrichtung 2 ist an sich bekannt und folgende:

Das Spannungsteil 6 wandelt eine über den Zündbus 10 zugeführte Gleich- oder Wechselspannung in eine Zündspannung von beispielsweise etwa 25 Volt, auf die der Zündkondensator 16, der eine Kapazität von beispielsweise etwa 2,2 µF hat, aufgeladen wird. Wenn der Steuerteil 8 ein über den Zündbus 10 zugeführtes Zündsignal erkennt, erzeugt der Steuerteil 8 an seinem Steuerausgang 22 ein Zündsignal in Form beispielsweise einer Spannungsänderung, auf die hin der Zündschalter 20 durchschaltet und sich der Zündkondensator 16 durch die Zündeinheit 18 entlädt und diese zündet. Typischerweise führt ein beispielsweise über 10 µsec andauernder Strom von 3,5 Ampere dazu, daß ein Glühdraht pyrotechnisches Material entzündet. Ein typischer Wert des ohm'schen Widerstandes der Zündeinheit liegt bei 2 - 10 Ohm. Der zusätzliche ohm'sche Widerstand des Entladungsstromkreises vom Zündkondensator 16 durch die Zündeinheit 18 und den Zündschalter 20 liegt typischerweise unter 5 Ohm.

Erfindungsgemäß ist der einen Mikroprozessor mit zugehörigen Speichereinrichtungen enthaltene Steuerteil 8 über den Zündbus 10 derart programmierbar, daß am Steuerausgang 22 Test- bzw. Zündimpulse vorgebbarer Dauer erzeugbar sind, während deren Dauer der Zündschalter 20 schließt, so daß sich der auf die Zündspannung aufgeladene Zündkondensator 16 nur während der vorgegebenen Dauer bzw. des vorgegebenen Zeitintervalls des Testimpulses über die Zündeinheit 18 entlädt und dieser nur einen kleinen Teil der in ihm gespeicherten Energie zuführt.

Der eingangs geschilderte Bruceton-Test ist in abgeänderter Form durchführbar, indem die zur Zündung der Zündeinheit notwendige Energie durch Variation der Länge des am Steuerausgang 22 erscheinenden Testimpulses ermittelt wird. Anstelle der eingangs geschilderten Spannungsänderung tritt eine Zeitdaueränderung, wobei die an einer geprüften Zündeinrichtung ermittelte, zur Zündung erforderliche Zeitdauer als Startwert für die Veränderung der Zeitdauer der nachfolgend zu prüfenden Zündeinrichtung verwendet wird. Ein Vorteil des erfindungsgemäßen Prüfverfahrens liegt darin, daß Toleranzen des Zündpfades (Zündkondensator, Verbindungsleitungen, Zündschalter) mit erfaßt werden und dadurch "Worst-Case"-Fälle in der Fertigung chargenweise erkannt werden können.

Es versteht sich, daß je nach Hardware- und Software-Aufwand in dem Steuerteil 8 sowie einer externen Prüfeinrichtung unterschiedlichste Durchführungsformen des Tests möglich sind. Beispielsweise kann das Steuerteil 8 derart programmiert sein, daß bei einer Prüfung selbsttätig am Steuerausgang 22 Zünd- bzw. Testsignale zunehmender Länge erzeugt werden, bis die Zündeinheit 18 zündet. Die ermittelte Dauer des Testsignals kann über den Zündbus 10 ausgelesen werden und steht für den Test einer weiteren Zündeinrichtung zur Verfügung, der mit einer etwas kürzeren Zeitdauer beginnt.

Alternativ kann der Steuerausgang 22 unmittelbar über den Zündbus 10 in einem Test-Mode mit Testimpulsen unterschiedlicher Dauer beaufschlagt werden. Die für die Zündung erforderliche Dauer wird jeweils gespeichert. Die Zündung wird beispielsweise dadurch festgestellt, daß bei mit einem Testoder Zündsignal beaufschlagten Steuerausgang 22 kein Strom durch die Zündeinheit 18 fließt. Der Strom durch die Zündeinheit 18 kann durch nicht dargestellte Spannungsabgriffe an der Zündeinheit oder einen, in dem entsprechenden Leitungspfad angeordneten Meßwiderstand bestimmt festgestellt werden.

Der eingangs beschriebene TTT-Test ist mit der beschriebenen Schaltung ebenfalls in einfacher Weise möglich. Es wird zunächst beispielsweise die typische Zündenergie eines Anzündelements, beispielsweise eines Schmelzdrahtes oder eines Dünnschichtelements, ohne Pyrotechnik ermittelt. Durch die fehlende thermische Kapazität der Pyrotechnik ist die nötige Zündenergie deutlich niedriger als mit Pyrotechnik. Als zweiter Wert wird die notwendige Zündenergie in dem vorgeschilderten Bruceton-Test ermittelt, d.h. die Zeitdauer, während der die mit Pyrotechnik versehene Zündeinheit 18 mit dem Zündkondensator 16 verbunden sein muß, um zu zünden. Die Zeitdauer, innerhalb der bei schlechter Anbindung zwischen Pyrotechnik und Anzündelement das Anzündelement abbrennt, ohne die Pyrotechnik anzuzünden, liegt zwischen den beiden vorgenannten Zeitdauern.

Die nach den vorgenannten Kriterien gewählte Zeitdauer bzw. Testenergie kann als 100%-ige Screening-Maßnahme in der Fertigung der Zündeinrichtungen eingesetzt werden. Bei schlechter Anbindung oder bei versehentlich fehlender Pyrotechnik brennt das Anzündelement ab (schmilzt der Schmelzdraht durch) und die fehlerhafte Zündeinrichtung kann ausgeschieden werden.

Als digitale Grundschritte für die Portionierung der Entladung des Zündkondensators reicht im allgemeinen eine zeitliche Auflösung von 1 µsec. Zukünftige Firing-Bussysteme arbeiten mit 1 MHz Bitrate, wodurch eine solche Zeitbasis möglich ist. Für eine noch bessere Auflösung könnte im Testbetrieb der Bustakt auf 4 MHz erhöht werden, wodurch eine Stufung auf 250 nsec möglich ist. Einen im allgemeinen ausreichenden Gesamtzeitbereich von 32 µsec in Schritte von 250 nsec aufzulösen, ist mit einem 7-Bit-Zähler mit vertretbarem Aufwand möglich.

Die erfindungsgemäße Zündeinrichtung kann in vielfältiger Weise abgeändert werden. Das Steuerteil 8 der Elektronikeinheit 4 kann beispielsweise als digitales Schaltwerk ausgebildet sein, welches ein Schaltelement enthält, das einen einen Test durchführenden Pfad selbsttätig sperrt, sobald ein Test abgelaufen ist.

Weiter können mehrere Zündeinheiten 18 und Zündschalter 20 vorgesehen sein.

## Patentansprüche

1. Verfahren zum Prüfen einer Zündeinrichtung für eine pyrotechnische Insassenschutzeinrichtung, insbesondere in Kraftfahrzeugen, welche Zündeinrichtung eine Zündspannungsquelle aufweist, die sich bei Beaufschlagung eines Zündschalters mit einem Zündsignal durch eine Zündeinheit hindurch entlädt, **dadurch gekennzeichnet,**
**daß** der Zündschalter für Prüfzwecke mit Prüfsignalen vorgebbarer Zeitdauer beaufschlagt wird.

2. Zündeinrichtung für eine pyrotechnische Insassenschutzeinrichtung, insbesondere in Kraftfahrzeugen, enthaltend eine Zündeinheit (18), einen Zündschalter (20) und eine Elektronikeinheit (4), welche Elektronikeinheit einen Eingang zum Anschluß einer externen Versorgungsleitung (10), einen Spannungsausgang (14) zum Anschluß der Zündeinheit (18) und einen Steuerausgang (22) zum Anschluß des Zündschalters aufweist, wobei der Spannungsausgang über die Versorgungsleitung auf eine vorbestimmte Zündspannung aufladbar ist, die sich bei mit einem Zündsignal beaufschlagten Steuerausgang und dadurch entsprechend geschaltetem Zündschalter durch die Zündeinheit hindurch entlädt,
**dadurch gekennzeichnet, daß**
die Elektronikeinheit (4) derart angesteuert wird, daß am Steuerausgang (22) Prüfsignale vorgebbarer Zeitdauer erzeugt werden.

3. Zündeinrichtung nach Anspruch 2, **dadurch gekennzeichnet, daß** die Elektronikeinheit (4) einen programmierbaren Baustein (8) zum Programmieren wenigstens einer vorbestimmten Zeitdauer enthält.

4. Zündeinrichtung nach Anspruch 2 oder 3, **dadurch gekennzeichnet, daß** parallel zum Spannungsausgang (14) ein Zündspannungskondensator (16) liegt und daß die vorgebbare Zeitdauer kurz ist im Vergleich zu der Zeitdauer, während der der Zündspannungskondensator einen wesentlichen Teil der in ihm gespeicherten Energie durch die Zündeinheit (18) hindurch entlädt.

5. Zündeinrichtung nach einem der Ansprüche 2 bis 4, **dadurch gekennzeichnet, daß** eine Einrichtung zur Messung des elektrischen Widerstandes der Zündeinheit (18) vorgesehen ist.

6. Zündeinrichtung nach einem der Ansprüche 3 und 4, **dadurch gekennzeichnet, daß** die Aufladung des Zündkondensators (16) auf eine zur Zündung der Zündeinheit (18) erforderliche Spannung, die Programmierung des programmierbaren Bausteins (8) und die Beaufschlagung des Steuerausgangs mit einem Prüfsignal durch die Versorgungsleitung (10) hindurch erfolgt.

7. Zündeinrichtung nach einem der Ansprüche 2 bis 6, **dadurch gekennzeichnet, daß** eine Vorrichtung vorgesehen ist, mit der die Beaufschlagbarkeit des Steuerausgangs (22) mit Prüfsignalen nach Durchführung eines Prüfzyklus sperrbar ist.

## Claims

1. Method for testing an. ignition device for a pyrotechnic occupant protection device, in particular in motor vehicles, which ignition device has an ignition voltage source which is discharged through an ignition unit when an ignition signal is applied to an ignition switch, **characterized**
**in that** the ignition switch has test signals applied to it for a time duration which can be predetermined, for test purposes.

2. Ignition device for a pyrotechnic occupant protection device, in particular in motor vehicles, including an ignition unit (18), an ignition switch (20) and an electronics unit (4), which electronics unit has an input for connection of an external supply line (10), a voltage output (14) for connection of the ignition unit (18), and a control output (22) for connection of the ignition switch, in which case the voltage output can be charged to a predetermined ignition voltage via the supply line, which predetermined ignition voltage is discharged through the ignition unit when an ignition signal is applied to the control output and the ignition switch is in consequence switched in a corresponding manner,
**characterized in that**
the electronics unit (4) is driven such that test signals with a time duration which can be predetermined are produced at the control output (22).

3. Ignition device according to Claim 2, **characterized in that** the electronics unit (4) contains a programmable module (8) for programming at least one predetermined time duration.

4. Ignition device according to Claim 2 or 3, **characterized in that** an ignition voltage capacitor (16) is connected in parallel with the voltage output (14), and **in that** the time period which can be predetermined is short in comparison with the time duration during which the ignition voltage capacitor discharges a major proportion of the energy that is stored in it, through the ignition unit (18).

5. Ignition device according to one of Claims 2 to 4, **characterized in that** a device is provided for measurement of the electrical resistance of the ignition unit (18).

6. Ignition device according to one of Claims 3 and 4, **characterized in that** the ignition capacitor (16) is charged to a voltage which is required for ignition of the ignition unit (18), the programmable module (8) is programmed, and a test signal is applied to the control output, through the supply line (10).

7. Ignition device according to one of Claims 2 to 6, **characterized in that** an apparatus is provided, by means of which it is possible to inhibit the capability to apply test signals to the control output (22) once a test cycle has been carried out.

## Revendications

1. Procédé de vérification d'un dispositif d'allumage pour un dispositif de protection pyrotechnique de passagers, en particulier dans un véhicule à moteur, ce dispositif d'allumage comprenant une source de tension d'allumage qui se décharge à travers une unité d'allumage lorsqu'un contacteur d'allumage est chargé d'un signal d'allumage, **caractérisé en ce que** le contacteur d'allumage est chargé, aux fins de vérification, de signaux de vérification ayant une durée préréglable.

2. Dispositif d'allumage pour un dispositif de protection pyrotechnique de passagers, en particulier dans un véhicule à moteur, comprenant une unité d'allumage (18), un contacteur d'allumage (20) et une unité électronique (4) qui comporte une entrée pour raccorder une ligne d'alimentation externe (10), une sortie de tension (14) pour connecter l'unité d'allumage (18), et une sortie de commande (22) pour connecter le contacteur d'allumage, la sortie de tension pouvant être chargée à travers la ligne d'alimentation à une tension d'allumage prédéterminée qui se décharge à travers l'unité d'allumage lorsque la sortie de commande est chargée d'un signal d'allumage et le contacteur d'allumage se trouve dans la position correspondante,
**caractérisé en ce que** l'unité électronique (4) est commandée de manière à produire à la sortie de commande (22) des signaux de vérification ayant une durée préréglable.

3. Dispositif d'allumage selon la revendication 2, **caractérisé en ce que** l'unité électronique (4) contient un composant programmable (8) pour programmer au moins une durée prédéterminée.

4. Dispositif d'allumage selon la revendication 2 ou 3, **caractérisé en ce qu'**un condensateur d'allumage (16) est placé parallèlement à la sortie de tension (14), et que la durée préréglable est courte par rapport à la durée pendant laquelle le condensateur d'allumage (16) fait passer à travers l'unité d'allumage (18) une partie essentielle de l'énergie qu'il a emmagasinée.

5. Dispositif d'allumage selon l'une des revendications 2 à 4, **caractérisé en ce qu'**un dispositif est prévu pour mesurer la résistance électrique de l'unité d'allumage (18).

6. Dispositif d'allumage selon l'une des revendications 3 et 4, **caractérisé en ce que** la charge du condensateur d'allumage (16) jusqu'à une tension nécessaire à l'allumage de l'unité d'allumage (18), la programmation du composant programmable (8) et l'application d'un signal de vérification à la sortie de commande sont effectuées par l'intermédiaire de la ligne d'alimentation (10).

7. Dispositif d'allumage selon l'une des revendications 2 à 6, **caractérisé en ce qu'**un dispositif est prévu permettant de bloquer l'application de signaux de vérification à la sortie de commande (22) après la fin d'un cycle de vérification.
